# EUROPEAN PATENT APPLICATION

(11) **EP 1 930 270 A1**
(43) Date of publication of application: **11.06.2008**
(21) Application number: 06781578.7
(22) Date of filing: 25.07.2006
(51) Int. Cl.: B65H 41/00, B42D 15/10

(54) **SHEET PEELING DEVICE AND SHEET PEELING METHOD**

(30) Priority: 27.09.2005 JP 2005279460
(71) Applicant: AI&DI Co., Ltd., Osaka-shi Osaka 542-0081 (JP)
(72) Inventor: IHARA, Atsumi, Osaka-shi Osaka 542-0081 (JP)
(74) Representative: Klunker, Hans-Friedrich
(86) International application number: PCT/JP2006/314666
(87) International publication number: WO 2007/037062

(57) **Abstract**

The sheet peeling apparatus 10 is provided with a pair of heat rollers 20 which transfers a card 1 along a feed path P and lowers of an adhesive strength of an adhesive; a pair of transfer rollers 30 which supplies a peeling adhesive tape 40 to which the sheet adheres and transfers the card along the feed path P and the like. The adhesive tape 40 contacts the sheet 5 via one roller 30A of the transfer rollers and then coiled onto a take-up roller 43. Since the adhesive strength of the adhesive taper is lowered, the sheet can be peeled from the card substrate when an easily obtainable and commercially available adhesive tape is used. So, an apparatus and method for peeling the sheet from the card substrate using a commercially available adhesive tape can be provided.

## Description

### Field of the Invention

The present invention relates to a sheet peeling apparatus and method for peeling a sheet adhered to a card substrate of an ID card and the like by an adhesive.

### Background of the Invention

As an ID card such as a student card and a membership card, an IC card, in which customized information of the holder is recorded, has been widely used. Identification information of the holder is recorded in a recording medium of the IC card. In addition, visible images and character information such as the holders' photograph and address are printed on one surface of the IC card.

When the ID card becomes unnecessary from expiring, graduating from the school and withdrawing from the membership, it used to be discarded. However, since the IC card is expensive, it is undesirable to discard in the aforesaid unnecessary case or in the case in which printing mistakes occur in viewpoint of expense and environmental problem.

Therefore, in order to reuse a card substrate of an IC card, visible photograph and characters are printed on a sheet and the sheet is bonded on one surface of the card substrate by a hot-melt adhesive and the like. In this technique, the sheet is peeled from the substrate when the card becomes unnecessary. And, an apparatus for peeling the sheet from the card substrate has been disclosed (refer to Patent literature 1, for example). In this apparatus, a peeling sheet having a thermosetting adhesive layer coated on one surface thereof is prepared and the thermosetting adhesive layer is lapped over a sheet to be peeled. Then, a heating roller is pressed on the peeling sheet to melt the hot-melt adhesive and to lower adhesive strength between the sheet and the card substrate. And, the thermosetting adhesive bonds the sheet to the peeling sheet and then the sheet is peeled from the substrate together with the peeling sheet.

Patent literature 1: Japanese Patent No.3403517

### Summary of Invention

### Problems to be solved by the Invention

In the method, it is necessary to prepare a specific sheet in which the thermosetting adhesive layer is pre-coated on one surface of a resin roll sheet having high tensile strength as the peeling sheet.

An object of the present invention is to provide such an apparatus and method for peeling a sheet from a substrate in which a commercially available adhesive tape may be used.

### Means of Solving the Problems

A card peeling apparatus according to the present invention is an apparatus for peeling a sheet adhered to a card substrate via an adhesive from the card substrate, the card peeling apparatus comprising: a card transfer mechanism for transferring said card substrate; means for lowering an adhesive strength of said adhesive; means for supplying a peeling adhesive tape; means for contacting said adhesive tape to said sheet transferred out from said adhesive strength lowering means and adhering said sheet to said adhesive tape; means for departing said tape to which said sheet adheres away from said card substrate; and means for coiling said tape to which said sheet adheres.

According to the present invention, since the apparatus has a means for lowering adhesive strength of the adhesive tape in advance, the sheet can be peeled from the card substrate even when an easily obtainable and commercially available adhesive tape is used. This facilitates the process for peeling the sheet from the IC card and thus promotes reuse of the IC card.

In the present invention, said adhesive is preferably a hot-melt type adhesive; and said adhesive strength lowering means is preferably a heat roller heated by a heater.

By use of the hot-melt type adhesive as the adhesive, the adhesive strength of the adhesive can be lowered by heating.

A card peeling method according to the present invention is a method for peeling a sheet adhered to a card substrate by an adhesive from the card substrate, the card peeling method comprising: lowering an adhesive strength of said adhesive; contacting an adhesive tape to said sheet and adhering said sheet to said adhesive tape; and departing said tape to which said sheet adheres away from said card substrate to peel said sheet from said card substrate.

In the present invention, said adhesive is preferably a hot-melt type adhesive; and said adhesive strength lowering means is preferably a heater which heats an upper surface of said sheet on said card substrate.

In this case, since the heater contacts and heats the upper surface of the sheet, it becomes possible to reduce heat amount transmitted to the card substrate. So, the card substrate can be prevented from deforming at the peeling.

In the card peeling apparatus according to the present invention, said tape coiling means is preferably a take-up roller for winding said tape and said adhesive tape is preferably not transparent. Because the identification information printed on the sheet which adheres to the adhesive tape is hardly viewed. This is advantageous in view of the protection of personal information.

In the card peeling apparatus according to the present invention, said tape coiling means is preferably a take-up roller for winding said tape and preferably has slitter for forming a plural of slits in said tape to which said sheet adheres.

In this case, when the adhesive tape to which the sheet adheres will be rewound from the take-up roller, the adhesive tape is cut along the slits into separated pieces like shredded papers. So, it becomes impossible to read the information printed on the sheet. This is more advantageous in view of the protection of personal information.

In the sheet peeling method according to the present invention, said adhesive tape is not transparent and a plural of slits are formed in said tape to which said sheet adheres.

Furthermore, in the sheet peeling method according to the present invention, said tape coiling means preferably has a peeling roller for peeling said sheet which adheres to said adhesive tape from said card substrate.

When the sheet will be peeled from the card substrate by rotation of the take-up roller, the length of the adhesive tape coiled onto the take-up roller becomes long and thus a diameter of the coiled adhesive tape in a roll form becomes large. In this case, in order to peel the sheet, a large driving force is needed. So, in the preferred embodiment, the peeling roller gives the force for peeling the sheet from the substrate sheet and the take-up roller coils the adhesive tape to which the sheet adheres. Since the adhesive tape is not coiled onto the peeling roller, the force for peeling the sheet is not changed.

In the sheet peeling apparatus according to the present invention, said peeling roller is preferably commonly used as said slitter because it becomes possible to reduce the number of the parts and simplify the structure of the apparatus.

### Effect of the Invention

As described above, according to the present invention, an apparatus and method for peeling the sheet from the card substrate using a commercially available adhesive tape can be provided. So, a work for peeling sheet becomes commonplace to promote reuse of the IC card.

### Detailed Description of Embodiment of the Invention

Hereinafter, a preferred embodiment of the present invention will be described in detail with reference to the drawings.
First, an embodiment of an ID card in which a sheet is adhered to an IC card will be described.

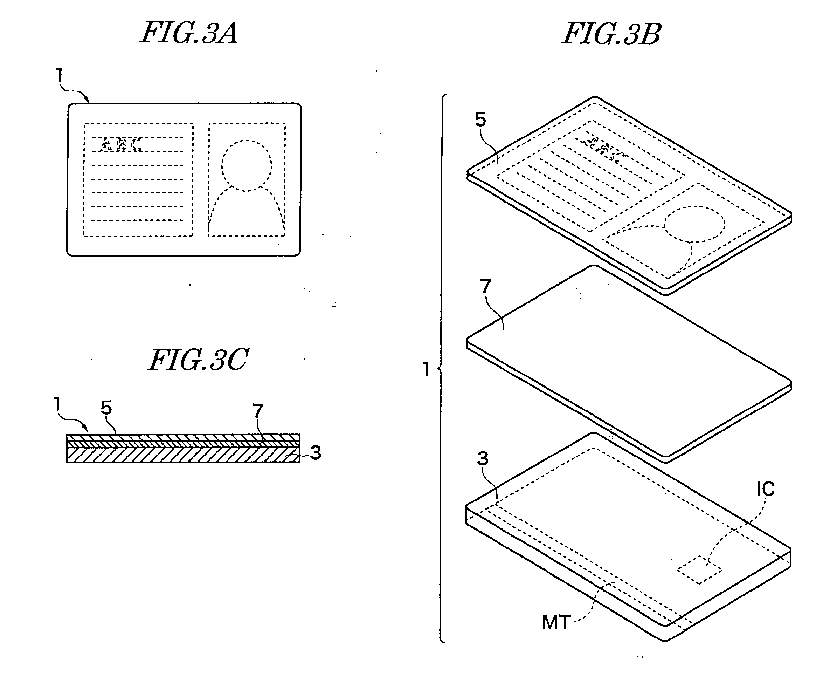

Fig.3 is a drawing showing one embodiment of a structure of the ID card; Fig.3A is a plan drawing; Fig.3B is an exploded perspective drawing and Fig.3C is a sectional side drawing.
As shown in Fig.3B and 3C, the card 1 has three layers having a card substrate 3, an adhesive layer 7 coated on one surface of the card substrate 3 and a sheet 5 adhered on the card substrate 3 by the adhesive layer 7.

The card 1 is used as an ID card such as a student card, a membership card and an employee card after recording the holders' identification information (address, student (member, employee) number, department, birth date and the like). In addition, a personal history of a corporation store, school cafeteria and company cafeteria, accumulation of electronic money and security code are also recorded or updated.

As the card substrate 3, a conventionally used IC card may be used. Such an IC card is made of resin such as ABS resin and PET resin and houses an IC chip as a recording medium. The holders' identification information such as address, student (member, employee) number, belonging, birth date and the like are recorded in a memory of the IC chip. And, another information such as accumulation of electronic money and security code is updated and recorded. On a back surface of the card substrate 3, a magnetic tape MT, which is another recording medium, is adhered. The magnetic tape also stores the holders' identification information such as birth date, address and student (member, employee) number.

On the sheet 5, visible images and characters such as photograph of the holders' face, address, student (member, employ) number, department and birth date are printed. These images and characters may be printed on either a back surface (a surface on a side of an adhesive layer 7) or a front surface. However, by printing on the back surface, the printed images and characters may be prevented from damaging and aged deterioration. When printed on the back surface, it is necessary to prepare a transparent sheet and to print mirrored images and characters on the back surface of the transparent sheet.
The present embodiment (Fig.3) shows the card 1 on which the images and characters are printed on the back surface (the surface on a side of the adhesive layer 7); however, the images and characters may be printed on the front surface of the sheet 5.

The sheet 5 is adhered on one surface of the card substrate 3 by the adhesive layer 7. An adhesive strength of the adhesive is high under room temperatures but lowers at risen temperatures. So, the sheet 5 can be adhered on the surface of the card substrate 3 under room temperatures. And, when the temperature rises to a predetermined temperature, the adhesive strength of the adhesive lowers so that the sheet 5 can be peeled from the card substrate 5. The predetermined temperature is selected such that the IC chip IC of the card substrate 5 is not adversely affected, it does not exist in daily life and the sheet 5 is not peeled from the card substrate 3 by daily temperature rising. As such an adhesive, a hot-melt adhesive may be used.

Accordingly, when the card 1 becomes unnecessary, by heating the card 1 to the predetermined temperature, the sheet 5 can be easily peeled from the card substrate 3. And, by initiating and updating the information recorded in the recording medium of the card substrate 3, the card substrate 3 can be reused if unnecessary.

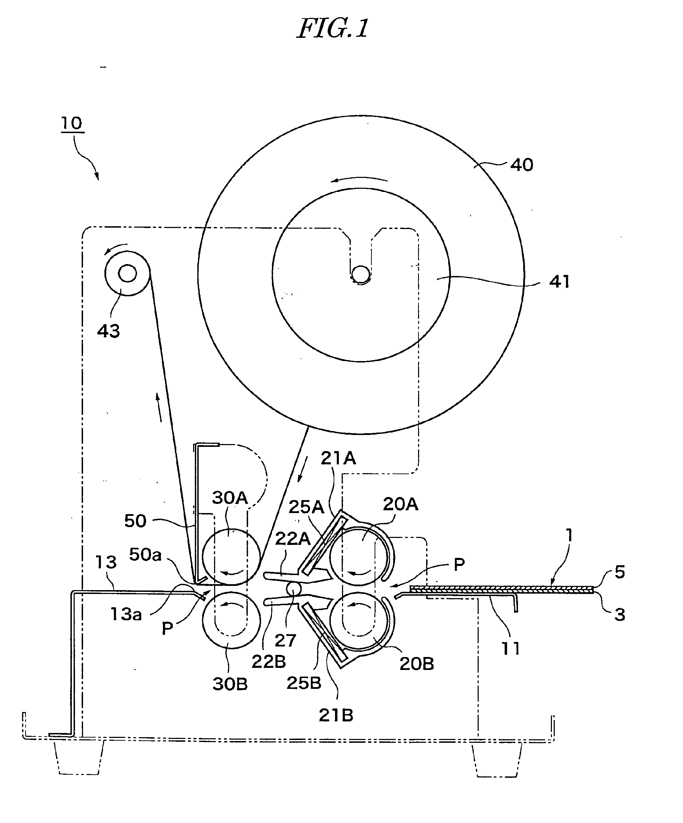

Fig.1 is a side drawing showing a sheet peeling apparatus of the first embodiment according to the present invention.
The sheet peeling apparatus 10 is provided with a horizontal feed path P on which the card 1 is transferred from a card insert plate 11 (shown in the right side of the figure) to a card discharge plate 13 (shown in the left side of the figure). Along the feed path P, a pair of heat rollers 20A and 20B which transfers the card 1 along the feed path P and lowers the adhesive strength of the adhesive; and a pair of transfer rollers 30A and 30B which supplies a peeling adhesive tape 40 to which the sheet 5 will be adhered and transfers the card 1 along the feed path P are arranged from the upstream (the right side of the figure) to the downstream (the left side of the figure). As described below, the adhesive tape 40 is coiled onto a take-up roller 43 after contacting the sheet 5 by one roller 30A of the pair of transfer rollers.

The card insert plate 11 extends horizontally along the feed path P, on which the card 1 is set in the longitudinal direction. At the downstream of the card insert plate 11, the heat rollers 20A and 20B are arranged at upper and under sides of the feed path P. Each roller rotates in the opposite direction at the same speed (for example, about 0.5m/min.). When the lead edge of the card 1 reaches between the rollers, the card 1 is transferred along the feed path P from the right side to the left side of the figure. Each of the rollers 20A and 20B is driven under variable speed by a motor with speed reducer. A distance between the rollers 20A and 20B is suitably adjusted depending on the thickness of the card 1.

The heat rollers 20A and 20B are made of heat-resistant rubber and rotatably supported in heater cases 21A and 21b made of aluminum respectively. Each heater case 21 covers the outer peripheral surface of each roller 20 other than the portion which faces the feed path P. The heater cases 21A and 21B house plate heaters 25A and 25B respectively. On activating each heater 25, the heat is transmitted to each heat roller 20 directly or via each heater case 21 resulting in heating the roller 20 to a predetermined temperature. For example, the heat roller 20 can be heated within the range of 95 to 140°C. The upper and lower heater cases 21A and 21B are separately arranged at upper and under sides of the feed path P via a spacer 27.
The upper and under heater cases 21A and 21B are provided with extending parts 22A and 22B extending from the heat rollers 20A and 20B to the vicinity of the transfer rollers 30A and 30B arranged at the downstream of the heat rollers 20A and 20B at both sides of the feed path P.

At the downstream of the heat rollers 20A and 20B, the transfer rollers 30A and 30B are arranged at upper and lower sides of the feed path P. A distance between the heat rollers 20 and transfer rollers 30 is shorter than the longitudinal length of the card 1. Each transfer roller 30 is driven to be rotated in the opposite direction at the same speed as the rotating speed of the heat rollers 20. When the lead edge of the card 1 reaches between the transfer rollers, the card 1 is transferred along the feed path P from the right side to the left side of the figure. Each of the rollers 30 is driven variably in speed by a motor with speed reducer. A distance between the rollers 30A and 30B is suitably adjusted depending on the thickness of the card 1.

At the downstream of the transfer rollers 30, the card discharge plate 13 is provided. The card discharge plate 13 extends on the level of the feed path P (the same level as the card insert plate). And, at the downstream of the upper roller 30A of the transfer rollers 30, a blade 50 is arranged extending in an upward direction perpendicular to the feed path P from the feed path P. Between the lower edge of the blade 50 and the upstream edge of the card discharge plate 13, a clearance (the feed path P) through which the card 1 can be passed is opened.

The lower edge 50a of the blade 50 is folded back at a sharp angle. And, the upstream edge 13a of the card discharge plate 13 is folded down from the feed path P.

The peeling adhesive tape 40 in a roll form is attached to a supply roller 41 rotatably supported to the apparatus. As the adhesive tape 40, a commercially available adhesive tape (for example, TM373, manufactured by Sumitomo 3M Ltd.) may be used. The adhesive tape 40 is fed from the supply roller 41 via the upper roller 30A of the transfer rollers 30 and the lower edge 50a of the blade 50 with the adhesive surface down in the figure. The adhesive tape 40 is finally coiled onto the take-up roller 43. In this case, the adhesive tape 40 is pulled upward from the lower edge 50a of the blade 50 at a substantial right angle relative to the feed path P. The take-up roller 43 is driven by a motor such that the adhesive tape 40 is transferred to the lower edge 50a of the blade 50 from the transfer rollers 30 at the same speed as the transfer speed of the card 1.

Next, a way for peeling the sheet 5 from the card substrate 3 using the sheet peeling apparatus 10 will be described.

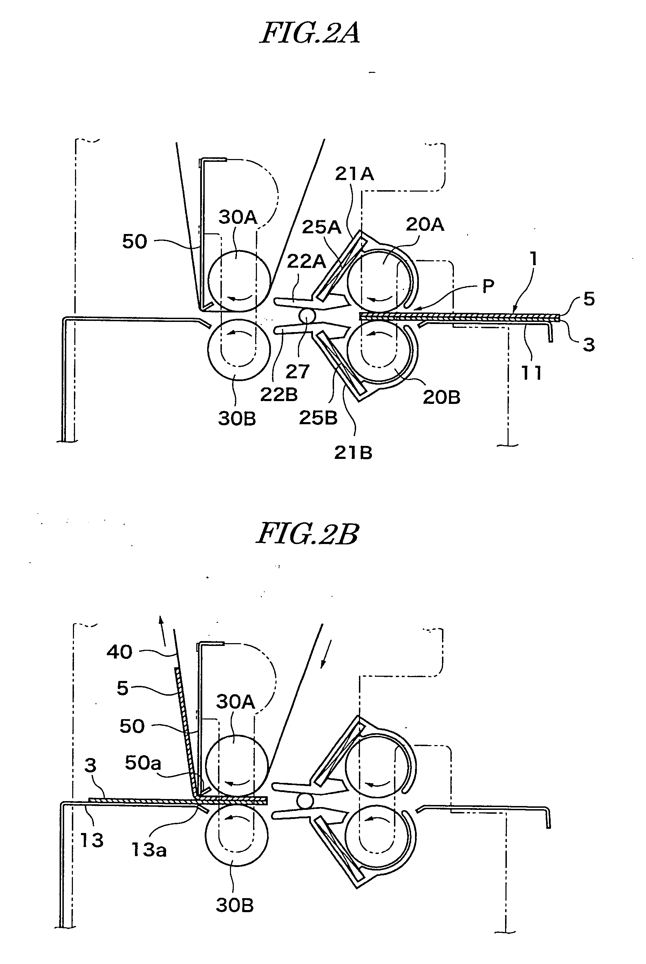

Fig.2 is a drawing showing a sheet peeling process.
First, the heater 25 is activated to heat the heat rollers 20 to the predetermined temperature. In this case, it is also possible to heat one heater 20A which contacts the sheet 5 of the card 1. After the heat rollers 20 are heated, as shown in Fig.2A, the card 1 (the adhesive layer is not shown in the figure) is set on the card insert plate 11 in the longitudinal direction with the sheet 5 up, and then inserted between the heat rollers 20. The heat rollers 20 are driven by the motor to be rotated so as to transfer the card 1 through the heat rollers 20. After the card 1 passes the heat rollers 20, the card 1 is heated so that the adhesive which bonds the sheet 5 to the card substrate 3 is softened to lower the adhesive strength between the sheet 5 and the card substrate 3.

The card 1, in which the adhesive strength of the sheet 5 is lowered, is transferred to the transfer rollers 30 from the heat rollers 20. During the transfer of the card 1 between the heat rollers 20 and the transfer rollers 30, since the card 1 is maintained at the heated state by the extending parts 22 of the heater cases 21 extending at both sides of the feed path P, the adhesive is prevented from hardening again.

When the lead edge of the card 1 reaches between the transfer rollers 30, the sheet 5 of the card 1 adheres on the adhesive surface of the adhesive tape 40 supplied along the under surface of the upper transfer roller 30A. And, as shown in Fig.2B, when the lead edge of the card 1 reaches the lower edge 50a of the blade 50, the adhesive tape 40 is pulled up and coiled onto the take-up roller 43. On the other hand, the card substrate 3 is sandwiched in between the lower edge 50a of the blade 50 and the upstream edge 13a of the discharge plate 13 and between the transfer rollers 30A and 30B so as to be supported at substantial a horizontal position on the feed path P. Accordingly, the sheet 5 of which the adhesive strength is lowered is departed from the card substrate 3, peeled upward with the adhesive tape 40 and coiled onto the take-up roller 43.

Since the card substrate 3 has a certain degree of rigidity and is pressed by the blade 50, when the sheet 5 is pulled up by adhesion with the adhesive tape 40, the card substrate 3 is maintained in substantial a horizontal position on the feed path P without floating from the discharge plate 13. And, the card substrate 3 from which the sheet 5 is peeled is discharged to the discharge plate 13.

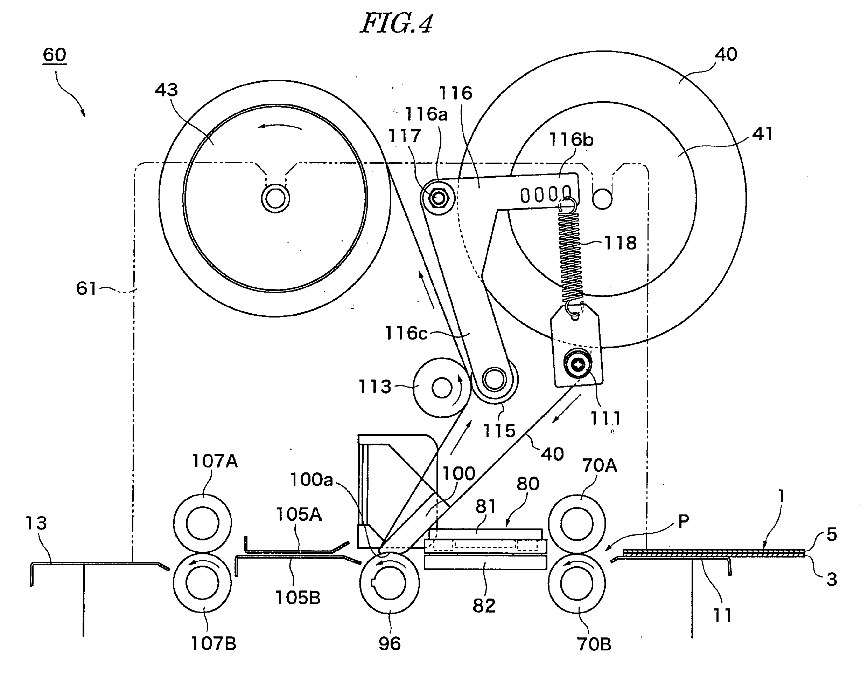

Fig.4 is a side drawing showing the second embodiment of the sheet peeling apparatus according to the present invention.
The sheet peeling apparatus 60 is also provided with a horizontal feed path P on which the card 1 is transferred from the card insert plate 11 (shown in the right side of the figure) to the card discharge plate 13 (shown in the left side of the figure). Along the feed path P, a pair of heat rollers 70; a heater plate assembly 80; a feed roller 96; a blade 100 supplying the peeling adhesive tape 40; a pair of transfer plates 105; and a pair of transfer rollers 107 are arranged from the upstream (the right side of the figure) to the downstream (the left side of the figure). In addition, the apparatus 60 of the embodiment is provided with a peeling roller 113 for peeling the sheet 5 which adheres on the adhesive tape 40 from the card substrate 3. The same members and parts as the apparatus of Fig.1 are numbered with the same number as the apparatus of Fig.1 and not described.

At the downstream of the card insert plate 11, the transfer rollers 70A and 70B are arranged at upper and lower sides of the feed path P. The lower roller 70B is driven at a fixed speed (for example, about 0.5m/min.). When the lead edge of the card 1 reaches between the rollers 70, the card '1 is transferred from the right side to the left side of the figure along the feed path P. A distance between the rollers 70A and 70B is suitably adjusted depending o the thickness of the card 1. At the downstream of the rollers 70, the heater plate assembly 80 is arranged so as to sandwich the feed path P from the upper and lower sides.

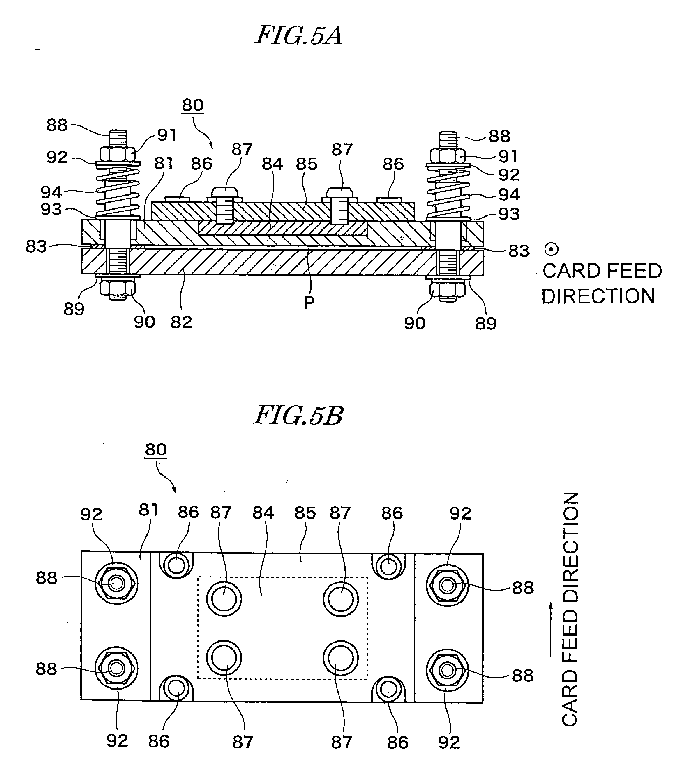

Figs.5 are drawings showing a structure of the heater plate assembly, Fig.5A is a sectional front drawing and Fig.5B is a top drawing.
The heater plate assembly 80 comprises an upper heater plate 81 and a lower plate 82. The heater plate 81, as shown in Fig.5B, has a long width in a direction perpendicular to the feed direction. As shown in Fig.5A, between the heater plate 81 and the lower plate 82, a washer 83 is arranged to form the feed path P between the plates 81 and 82.

On the upper surface of the heater plate 81, a plate heater 84 is embedded. The plate heater 84 is shorter than the length (longer length) of the card 1 and wider than the width (shorter length) of the card 1. The plate heater 84 is covered with a heater hold-down plate 85 slightly larger than the plate heater 84. The heater hold-down plate 85 is detachably mounted to the heater plate 81 at four corners by bolts 86. In addition, the plate heater 84 is pressed to the heater plate 81 by bolts 87 from the upper side of the heater hold-down plate 85 so that the plate heater 84 can closely contact the heater plate 81. Sensors and electric supply lines (not shown) are attached to the bolt 87.

The heater plate 81 is displaceably supported in the upward direction relative to the lower plate 82. The heater plate 81 is supported to the lower plate 82 at four corners by rods 88. As shown in Fig.5A, each rod 88 penetrates the heater plate 81, the washer 83 and the lower plate 82. And, the lower end of each rod 88 is screwed with a nut 90. The upper end of each rod 88 is screwed with a nut 91. Between the under surface of the nut 91 and the upper surface of the heater plate 81, a spring 94 is arranged via washers 92 and 93. The springs 94 bias the heater plate 81 downward relative to the nuts 91.

When the card substrate which is transferred along the feed path P between the heater plate 81 and the lower plate 82 is thicker in thickness than the washer 83, the heater plate 81 can move upward against the bias force of the spring 94. Thus, the height of the feed path P between the heater plate 81 and the lower plate 82 can be adjusted depending on the thickness of the card 1.

Referring to as Fig.4 again, at the downstream of the heater plate assembly 80, the feed roller 96 (for example, made of silicon rubber) is arranged. The feed roller 96 is driven at a fixed speed (for example, about 0.5m/mim.). A distance between the feed roller 96 and the above-described transfer rollers 70 is slightly shorter than the length (longitudinal length) of the card. The blade 100 contacts the feed roller 96 from an upper oblique backward direction. The blade 100 is a thick plate having a wide width and has a bevel distal surface (contact surface) 100a. The distal surface 100a contacts the feed roller 96 in substantially parallel with the feed path P. The distal surface 100a has a blunt angle rounded upstream edge and a sharp angle rounded downstream edge.

At the downstream of the blade 100 and the feed roller 96, the card transfer plates 10 are provided which comprises upper and lower plates 105A and 105B arranged at upper and lower sides of the feed path P.

At the downstream of the card transfer plates 105, a pair of the transfer rollers 107 is arranged which comprises upper and lower transfer rollers 107A and 107B. The lower transfer roller 107B is driven at a fixed speed (for example, about 0.5m/min.). A distance between the feed roller 96 and the transfer rollers 107 is slightly shorter than the longitudinal length of the card. At the downstream of the transfer rollers 107, the card discharge plate 13 is arranged.

The peeling adhesive tape 40 in a roll form is attached to the supply roller 41. As the peeling adhesive tape, a commercially available opaque adhesive tape can be used. The supply roller 43 is detachably and rotatably supported to a casing 61. The adhesive tape 40 is dispensed from the supply roller 41 via a guide roller 111 with the adhesive surface downside, wound on the distal edge 100a of the blade 100 and coliled onto the take-up roller 43 via a peeling roller 113. The take-up roller 43 is detachably attached to the casing 61 and is rotatable by a motor.

The peeling roller 113 is made of a material to which the adhesive surface of the adhesive tape 40 hardly adheres (for example, Teflon (trade name) and silicone rubber). And, the peeling roller 113 is attached movably in the direction of the feed path P (in the left and right directions of the figure) within an upstream region behind the downstream edge of the distal surface 100a of the blade 100. The peeling roller 113 is driven to be rotated by a motor. For instance, when the peeling roller 113 is moved to the downstream direction (in the left direction of the figure), an angle of the adhesive tape 40 pulled up from the distal surface 100a of the blade 100 becomes large. When the peeling roller 113 is moved to the upstream direction (in the right direction of the figure), the angle becomes small (becomes a sharp angle). The smaller the angle is, the larger the peeling force is. The angle variable by the position of the peeling roller 113 is adjusted depending on the material of the card substrate (PET or PVC) (a moving mechanism of the peeling roller 113 is not described). The take-up roller 43 and the peeling roller 113 are driven such that the adhesive tape 40 is dispensed at the same speed as the transferring speed of the card 1 (for example, about 0.5m/min.).

A support roller 115 is pressed onto a portion of the peeling roller 113 at which the adhesive tape 40 contacts. The support roller 115 is attached to the casing 61 via an L-shaped link plate 116 which is rotatably attached to the rotating axis 117 mounted to the casing 61 at the substantial center portion. One end 116b of the link plate 116 is biased by a pull spring 118. The support roller 115 is rotatably attached to the other end 116c of the link plate 116. The support roller 115 is subjected to a rotary force of the link plate 116 around the rotating axis 117 in the clockwise direction of the figure by the pull spring 118, thereby pressing the support roller 115 onto the peeling roller 113. Therefore, even when the peeling roller 113 is moved as described above, the support roller 115 is pressed onto the peeling roller 113.

Then, a way for peeling the sheet 5 from the card substrate 3 by the sheet peeling apparatus 60 will be described.
First, the plate heater 84 is activated to heat the heater plate 81 to the predetermined temperature. After the heater plate 81 is heated, the card 1 is set on the card insert plate 11 in the longitudinal direction with the sheet 5 upside, and then inserted between the transfer rollers 70. The card 1 is transferred to the heater plate assembly 80 by the transfer rollers 70. In the heater plate assembly 80, when the card 1 passes through the feed path P between the heater plate 81 and the lower plate 82, the upper surface (the sheet 5) of the card 1 is heated by the heater plate 81 so that the adhesive which bonds the sheet 5 to the card substrate 3 is softened to lower the adhesive strength between the sheet 5 and the card substrate 3.

The card 1, in which the adhesive strength of the sheet 5 is lowered, is transferred between the blade 100 and the feed roller 96. When the lead edge of the card 1 reaches between the blade 100 and the feed roller 96, the sheet 5 of the card 1 adheres on the adhesive surface of the adhesive tape 40 supplied along the under surface 100a of the blade 100. And, when the lead edge of the card 1 reaches at the downstream edge of the under surface 100a of the blade 100, although the rear portion of the card 1 (the upstream side of the card 1) is sandwiched in between the heater plate 81 and the lower plate 82 so that the card 1 is maintained in a substantial horizontal position on the feed path P, the sheet 5 of which the adhesive strength is lowered is pulled upward by the peeling roller 113 as adhered to the adhesive tape 40 and departed from the card substrate 3. The adhesive tape 40 to which the sheet 5 adheres is coiled onto the take-up roller 43 via the peeling roller 113. At this point, the sheet 5 is peeled from the card substrate 5 by rotation of the peeling roller 113.

When the sheet 5 will be peeled from the card substrate 3 by rotation of the take-up roller 43, the length of the adhesive tape 40 coiled by the take-up roller 43 becomes long and thus the coiled adhesive tape becomes thick (a diameter of the coiled adhesive tape in a roll form becomes large). In this case, in order to peel the sheet 4, a large driving force is needed. So, in this embodiment, the peeling roller 113 is driven to sandwich the adhesive tape 40 and the sheet 5 in between the peeling roller 113 and the support roller 115, resulting in peeling the sheet 5 from the card substrate 3. Then, the adhesive tape 40 is coiled onto the take-up roller 43. Since the adhesive tape 40 does not adhere to the peeling roller 113, a force for peeling the sheet 5 is not changed. Accordingly, if the length of the adhesive tape 40 coiled onto the take-up roller 43 becomes long, it is unnecessary to increase the driving force of the take-up roller 43.

Since the card substrate 3 has a certain degree of rigidity and is pressed by the blade 100, when the sheet 5 is pulled upward by the adhesive tape 40, the card substrate 3 is transferred to the transfer plates 105 as maintained at substantial a horizontal position on the feed path P. And, the card substrate 3 from which the sheet 5 is peeled is supplied to the transfer rollers 107 from the transfer plates 105 and then to the discharge plate 13. The information printed in the sheet 5 which adheres on the adhesive tape 40 can not be read because the adhesive tape 40 is not transparent.

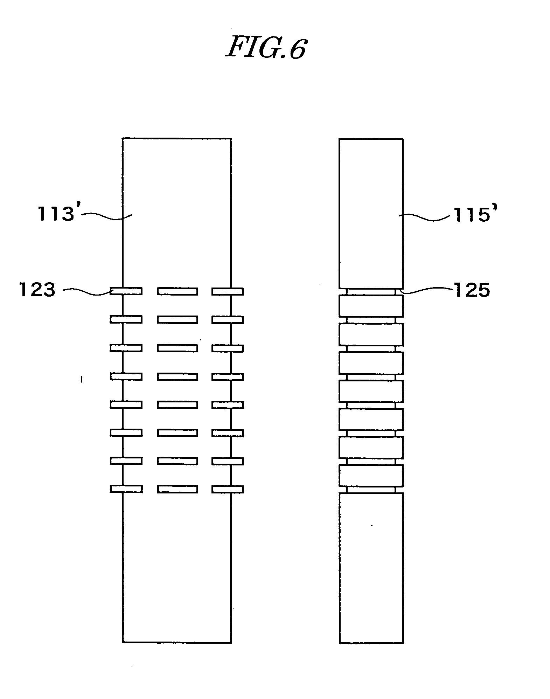

Fig.6 is a drawing showing structures of the peeling roller and support roller of the sheet peeling apparatus of the third embodiment according to the present invention.
The sheet peeling apparatus of the embodiment has the same structure as the sheet peeling apparatus of Fig.4 except for the structures of the peeling roller and the support roller. The peeling roller 113' of the present embodiment has short cutters 123 arranged in the circumferential direction and embedded at the central portion of the roller. And, the support roller 115' has grooves 125 at the opposite portion of the cutters 123 of the peeling roller 113'. When the rollers 113' and 115' are pressed each other, the cutters 123 are inserted in the grooves 125. The cutters 123 and the grooves 125 may be provided at either roller.

By using the peeling roller 113' and the support roller 115' , cut lines are formed in the sheet 5 by the cutters 123 when the adhesive tape 40 to which the sheet 5 adheres passes between the rollers 113' and 115'. Accordingly, when the adhesive tape, to which the sheet 5 adheres, coiled onto the take-up roller 43 will be peeled, the adhesive tape 40 may be cut along the cut lines into separated pieces like shredded papers. So, it becomes difficult to read the information printed on the sheet 5.

### Brief Description of the Drawings

Figs.1 is a side drawing showing a sheet peeling apparatus of the first embodiment according to the present invention;
Fig.2 is a drawing showing a sheet peeling process;
Fig.3 is a drawing showing one embodiment of a structure of the ID card; Fig.3A is a plan drawing; Fig.3B is an exploded perspective drawing and Fig.3C is a sectional side drawing;
Fig.4 is a side drawing showing the second embodiment of the sheet peeling apparatus according to the present invention;
Figs.5 are drawings showing a structure of the heater plate assembly, Fig.5A is a sectional front drawing and Fig.5B is a top drawing; and
Fig.6 is a drawing showing structures of the peeling roller and support roller of the sheet peeling apparatus of the third embodiment according to the present invention.

### Explanation of item numbers

- 1: ID card
- 3: card substrate
- 5: sheet
- 7: adhesive layer
- 10: sheet peeling apparatus
- 11: insert plate
- 13: discharge plate
- 20: heat roller
- 21: heater case
- 22: extending part
- 25: heater
- 27: spacer
- 41: supply roller
- 43: taken-up roller
- 50: blade
- 60: sheet peeling apparatus
- 61: casing
- 70: heat roller
- 80: heater plate assembly
- 81: heater plate
- 82: lower plate
- 83,89,92,93: washer
- 84: plate heater
- 85: heater hold-down plate
- 86,87: bolt
- 88: rod
- 90,91: nut
- 94: spring
- 96: feed roller
- 100: blade
- 105: transfer plate
- 107: transfer roller
- 111: guide roller
- 113: peeling roller
- 115: support roller
- 116: link plate
- 118: spring
- 123: cutter
- 125: groove

## Claims

1. A card peeling apparatus for peeling a sheet adhered to a card substrate via an adhesive from the card substrate comprising:
a card transfer mechanism for transferring said card substrate;
means for lowering an adhesive strength of said adhesive;
means for supplying a peeling adhesive tape;
means for contacting said adhesive tape to said sheet transferred out from said adhesive strength lowering means and adhering said sheet to said adhesive tape;
means for departing said tape to which said sheet adheres away from said card substrate; and
means for coiling said tape to which said sheet adheres.

2. A card peeling apparatus according to claim 1,
wherein said adhesive is a hot-melt type adhesive; and
said adhesive strength lowering means is a heat roller heated by a heater.

3. A card peeling method for peeling a sheet adhered to a card substrate by an adhesive from the card substrate comprising:
lowering an adhesive strength of said adhesive;
contacting an adhesive tape to said sheet and adhering said sheet to said adhesive tape; and
departing said tape to which said sheet adheres away from said card substrate to peel said sheet from said card substrate.

4. A card peeling apparatus according to claim 1,
wherein said adhesive is a hot-melt type adhesive; and
said adhesive strength lowering means is a heater which heats an upper surface of said sheet on said card substrate.

5. A card peeling apparatus according to one of claims 1, 2 and 4,
wherein said tape coiling means is a take-up roller for winding said tape; and
said adhesive tape is not transparent.

6. A card peeling apparatus according to one of claims 1, 2, 4 and 5,
wherein said tape coiling means is a take-up roller for winding said tape and has slitter for forming a plural of slits in said tape to which said sheet adheres.

7. A sheet peeling method according to claim 3,
wherein said adhesive tape is not transparent and a plural of slits are formed in said tape to which said sheet adheres.

8. A sheet peeling apparatus according to one of claims 1, 2, 4, 5 and 6,
wherein said tape coiling means has a peeling roller for peeling said sheet which adheres to said adhesive tape from said card substrate.

9. A sheet peeling apparatus according to claim 7,
wherein said peeling roller is commonly used as said slitter.
